# EUROPEAN PATENT APPLICATION

(11) **EP 4 243 051 A1**
(43) Date of publication of application: **13.09.2023**
(21) Application number: 22178056.2
(22) Date of filing: 09.06.2022
(51) Int. Cl.: H01J 35/10, H02K 19/06, H02K 19/10, H02K 19/12

(54) **ROTARY ANODE X-RAY SOURCE**

(30) Priority: 08.03.2022 WO PCT/CN2022/202207
(71) Applicant: Koninklijke Philips N.V., 5656 AG Eindhoven (NL); Helmut-Schmidt-Universität, 22043 Hamburg (DE)
(72) Inventor: WOYWODE, Oliver, Eindhoven (NL); BATHE, Christoph, Eindhoven (NL); BLOME, Christian Herbert, 5656AG Eindhoven (NL); HOLZINGER, Felix Franz Ralph, 5656AG Eindhoven (NL); JIANG, Jacky Ping, Eindhoven (NL); STEINACKER, Lucas Alexander, Eindhoven (NL); FRITZE, Eric, Eindhoven (NL); HOFFMANN, Klaus Friedrich, Eindhoven (NL); KREISCHER, Christian, Eindhoven (NL)
(74) Representative: Philips Intellectual Property & Standards

(57) **Abstract**

A rotary anode X-ray source comprising an X-ray tube, a rotatable anode disposed inside the X-ray tube, wherein the rotatable anode is configured to rotate about its central axis, and an anode drive comprising a rotor, which is connected with the rotatable anode is provided. The anode drive is a flux switching machine, FSM, and the rotor is a solid rotor.

## Description

### FIELD OF THE INVENTION

The invention provides a rotary anode X-ray source comprising an X-ray tube, a rotatable anode disposed inside the X-ray tube, wherein the rotatable anode is configured to rotate about its central axis, and an anode drive comprising a rotor, which is connected with the rotatable anode.

### BACKGROUND OF THE INVENTION

Rotary anode X-ray sources generally employ asynchronous motors, ASM, for driving the rotatable anode. Asynchronous motors are known as being robust and having a simple structure.

The use of asynchronous motors in X-ray tubes has some disadvantages including high reactive power demand and low efficiency. This is due, for example, to the relatively large air gap between rotor and stator associated with X-ray tubes. Therefore, the power factor may be below 0.5 and the power consumption of the anode drive motor may be as high as 50 % of the entire X-ray tube loss. Moreover, size reduction in terms of axial length is difficult in ASM applications.

It is an object of the present invention to overcome at least some of the above problems.

### SUMMARY OF THE INVENTION

The invention provides a rotary anode X-ray source, a method for manufacturing an X-ray source, and a method for operating an X-ray source according to the independent claims. Preferred embodiments are laid down in the dependent claims.

The rotary anode X-ray source comprises an X-ray tube, a rotatable anode disposed inside the X-ray tube, wherein the rotatable anode is configured to rotate about its central axis, and an anode drive comprising a rotor, which is connected with the rotatable anode. The anode drive is a flux switching machine, FSM, and the rotor is a solid rotor.

The X-ray source of the present disclosure overcomes at least some of the above problems, for example, by employing a flux switching machine, FSM, with a solid rotor.

Flux switching machines provide the relatively high power density of a permanent magnet synchronous motor while still being robust. However, the construction of flux switching machines for X-ray sources is difficult, among others, because the ultra-clean vacuum environment of an X-ray source is very sensitive to contamination, making some known constructions of FSM rotors difficult to apply in such an environment.

For example, rotors assembled from multiple component parts, there is a large surface area that may carry contaminants and there is also a risk that assembly, e.g., lamination, will lead to air-pockets being entrapped between the component parts after assembly. The air-pockets and contaminants may then be released into the vacuum environment and deteriorate the vacuum. Careful preparation and assembly may be required to employ such rotors in the X-ray tube.

Thus, the X-ray source proposed by the present disclosure allows for improved efficiency without increasing the risk of deterioration of the vacuum.

Moreover, the solid rotor also allows for a higher operating temperatures. Accordingly, cooling need not necessarily be as rigorous as for other types of rotors. As an example, in other types of rotors, materials have to be employed that lead to comparatively low upper limits for the operating temperature, as said materials start deteriorating at relatively low temperatures. The deterioration of these materials is often accompanied by a deterioration of the vacuum when the materials evaporate. In the solid rotors of the present disclosure, material deterioration only occurs at higher temperatures.

For the sake of completeness, it is to be understood that the rotor being connected with the anode means that a rotation of the rotor effects a rotation of the anode, and, particularly, may refer to a mechanical connection, more particularly, a rigid mechanical connection.

The solid rotor may be made from a single piece of material. This is advantageous for low risk of deteriorating the vacuum.

The solid rotor dimensions, particularly the longitudinal dimension of the solid rotor, may be determined taking into account an optimization that minimizes eddy currents.

Eddy currents may be a major source of losses and may be particularly prevalent in rotors that are solid. The advantage of reducing eddy currents is that it decreases losses. Reducing eddy currents by constructing the rotor with suitable dimensions is an easy and efficient way to reduce eddy currents as compared to, for example, employing more powerful cooling.

Eddy currents can be determined by known models with common calculation methods and/or can be empirically or semi-empirically determined for different rotor dimensions. Based on the determined eddy currents, an optimization can be performed using known optimization methods.

It is to be understood that the optimization may be performed taking into account constraints or boundary conditions, for example intended operating parameters. For example, the constraints may comprise a maximum operating temperature and/or maximum available cooling capability in terms of cooling the rotor. As seen above, a solid rotor of the present disclosure allows for higher maximum operating temperatures and/or may require less rigorous cooling than other types of rotors.

The optimization may also include optimizing for two or more parameters, one being the eddy currents and other parameters which may include, for example, overall X-ray source efficiency.

The solid rotor dimension in the longitudinal direction may be equal to or less than 50 mm, in particular equal to or less than 45 mm, in particular equal to or less than 35 mm, in particular equal to or less than 25 mm.

This size may result from the optimization mentioned above. It is noted that compared to typical ASM, this amounts to a reduction in length by 50 % or more That is, typical ASMs have dimensions of 90 mm upwards. This allows for an overall more compact X-ray source.

The solid rotor may be mounted using a rotor mounting without a shaft.

The advantage of such a mounting is that it contributes to size reduction. Furthermore, it also reduces overall weight of the motor arrangement, thereby further reducing energy consumption. In addition, the cooling of the solid rotor can be made more efficient. For example, heat transfer may be effected more directly or, in other words, the thermal connection can be improved, as compared to using a mounting with a shaft. Improved cooling reduces the temperature increase associated with the motor losses. Moreover, the construction that does not employ a shaft is less sensitive to bending, e.g., due to forces that occur when rotating the X-ray source, as would be the case when it is applied in CT scanners, for example.

The solid rotor may be mounted directly to a bearing, in particular a bearing to which the rotating anode is mounted. The bearing may in particular be a spiral groove bearing. This is one suitable example for an advantageous mounting without a shaft that allows for efficient cooling and size reduction. Moreover, many existing X-ray sources already comprise spiral groove bearings, such that this type of mounting is particularly advantageous in terms of compatibility with pre-existing systems.

The bearing may be configured such that its rotating portion is arranged concentrically with its static portion, the static portion being a hollow shaft, the X-ray source configured to transport cooling fluid through the hollow shaft for cooling.

Thus, the rotating portion of the bearing is very efficiently cooled and, hence, any elements mounted to the bearing, particularly the anode and/or the solid rotor, are efficiently cooled as well.

The solid rotor may be in the shape of a hollow cylinder and configured to rotate around the cylinder axis. The hollow shaft may extend through the hollow portion of the solid rotor. Accordingly, the X-ray source may be configured such that, in operation, the solid rotor rotates around the hollow shaft. This allows for a particularly compact and/or sturdy arrangement. As also mentioned below, the solid rotor may, for example, be formed in the shape of a hollow cylinder having a gear-shape.

The solid rotor may be mounted to the bearing in such a manner as to allow for thermal conduction between the solid rotor and the rotating portion of the bearing, in particular, such that a surface of the bearing and a surface of the solid rotor are in direct contact or coupled only via one or more elements that are thermally conductive at operating temperature.

The solid rotor may be fixed to the bearing by means of screws or rivets or by means of welding or soldering or by means of casting.

The X-ray source may further comprise a cooling system, wherein the cooling system is thermally connected to the solid rotor via the mounting of the solid rotor, in particular, wherein the X-ray source may be configured such that, in operation, cooling of the solid rotor is effected by a heat exchange between a cooling fluid and the solid rotor via the mounting of the solid rotor, in particular the bearing to which the solid rotor is mounted. In particular, the X-ray source may be configured such that, in operation, cooling of the solid rotor is effected by a heat exchange between a cooling fluid and the solid rotor directly via the mounting of the solid rotor, in particular directly via the bearing to which the solid rotor is mounted.

This allows for particularly efficient cooling and, consequently, reduced losses.

The bearing in this context may be a bearing as described throughout the present disclosure, for example a spiral groove bearing.

The heat exchange may, for example, be effected by transporting the cooling fluid through the static portion of bearing, which may be formed as a hollow shaft. The rotating portion of the bearing may be formed as a hollow shaft arranged so as to rotate around the static portion, separated from the static portion by a lubricating film. This allows for even increased heat exchange.
The solid rotor may be formed in the shape of a hollow cylinder, particularly a hollow cylinder having a gear-shape, the cylinder-axis corresponding to the longitudinal axis of the solid rotor, wherein the solid rotor is mounted so as to revolve around the longitudinal axis. This is a construction that can be easily fabricated, particularly from a single piece of material. At the same time, it is sturdy and well-suited for use as a rotor in an FSM.

It is noted that a "cylinder" in the present disclosure is used to refer to cylinders having a base that need not necessarily have a circular outline, but may have a polygonal outline, e.g., such that the outer surface of the solid rotor is gear-shaped.

The solid rotor may be made from ferromagnetic material, in particular an iron material, in particular stainless steel, for example stainless steel with Material No. 1.4509 or AISI/SAE 441, or tempered steel, for example tempered steel like C35 or C45 steel. This allows for favorable characteristics for fabricating the solid rotor and/or for favorable characteristics in terms of operation of the motor, e.g., in terms of efficiency.

The solid rotor may be a single piece of material obtained by milling and/or molding and/or cutting and/or 3D-printing.

The invention also provides a method for manufacturing an X-ray source, particularly an X-ray source as described above. The method comprises providing an X-ray tube, disposing a rotatable anode inside the X-ray tube, wherein the rotatable anode is configured to rotate about its central axis, providing an anode drive comprising a rotor, and connecting the rotor with the rotatable anode. The anode drive is a flux switching machine, FSM, and the rotor is a solid rotor.

The method may further comprise manufacturing the solid rotor.

The method may further comprise, prior to manufacturing the solid rotor, determining the solid rotor dimensions, particularly the longitudinal dimension of the solid rotor, taking into account an optimization that minimizes eddy currents.

The method may further comprise manufacturing the solid rotor such that the solid rotor dimension in the longitudinal direction is equal to or less than 45 mm, in particular equal to or less than 35 mm, in particular equal to or less than 25 mm.

Disposing the rotatable anode inside the X-ray tube may comprise mounting the solid rotor using a rotor mounting without a shaft, in particular mounting the solid rotor directly to a bearing, in particular a bearing to which the anode is mounted. In particular, the bearing may be a spiral groove bearing.

The bearing may be configured such that its rotating portion is arranged concentrically with its static portion, the static portion being a hollow shaft, the X-ray source configured to transport cooling fluid through the hollow shaft for cooling. In particular, the solid rotor may be in the shape of a hollow cylinder and the hollow shaft extends through the hollow portion of the solid rotor in a longitudinal direction, the X-ray source configured such that, in operation, the solid rotor rotates around the hollow shaft.

The method may comprise mounting the solid rotor to the bearing in such a manner as to allow for thermal conduction between the solid rotor and the rotating portion of the bearing, in particular, such that a surface of the rotating portion of the bearing and a surface of the solid rotor are in direct contact or coupled only via one or more elements that are thermally conductive at operating temperature

The method may further comprise fixing the solid rotor to the bearing by means of screws or rivets or by means of welding or soldering or by means of casting.

The method may further comprise thermally connecting a cooling system to the solid rotor, wherein the cooling system is thermally connected to the solid rotor via the mounting of the solid rotor. In particular, the X-ray source may be configured such that, in operation, cooling of the solid rotor is effected by a heat exchange between a cooling fluid and the solid rotor, particularly directly, via the mounting of the solid rotor, in particular the bearing to which the solid rotor is mounted.

The method may further comprise manufacturing the solid rotor, wherein the solid rotor is a single piece of material obtained by milling and/or molding and/or cutting and/or 3D-printing.

The solid rotor may be formed in the shape of a cylinder, particularly a hollow cylinder having a gear-shape, the cylinder-axis corresponding to the longitudinal axis of the solid rotor, wherein the solid rotor is mounted so as to revolve around the longitudinal axis.

The solid rotor may be made from ferromagnetic material, in particular an iron material, in particular stainless steel, for example stainless steel with Material No. 1.4509 or AISI/SAE 441, or tempered steel, for example tempered steel like C35 or C45 steel.

The invention also provides a method for operating an X-ray source, particularly an X-ray source as described above. The method comprises driving, by means of an anode drive, a rotatable anode disposed inside an X-ray tube about the anode's central axis, wherein the anode drive is a flux switching machine, FSM, and has a solid rotor connected to the rotatable anode.,

The method for operating the X-ray source may comprise cooling the solid rotor, particularly while driving the solid rotor, by means of a cooling system that is thermally connected to the solid rotor via the mounting of the solid rotor. In particular, the X-ray source may be configured such that, in operation, cooling of the solid rotor is effected by a heat exchange between a cooling fluid and the solid rotor, particularly directly, via the mounting of the solid rotor, in particular the bearing to which the solid rotor is mounted

The features and advantages outlined above in the context of the X-ray source similarly apply to the method for manufacturing an X-ray source and the method for operating an X-ray source described herein.

Further features, examples, and advantages will become apparent from the detailed description making reference to the accompanying drawings.

### BRIEF DESCRIPTION OF THE DRAWINGS

Fig. 1 shows a schematic and not to scale illustration of a cross-section of an X-ray source;
Fig. 2 shows a schematic and not to scale illustration of a cross-section of a portion of an X-ray source in an oblique view; and
Figs. 3a and 3b show a schematic and not to scale side view and front view of a portion of an X-ray source.

### DETAILED DESCRIPTION OF EMBODIMENTS

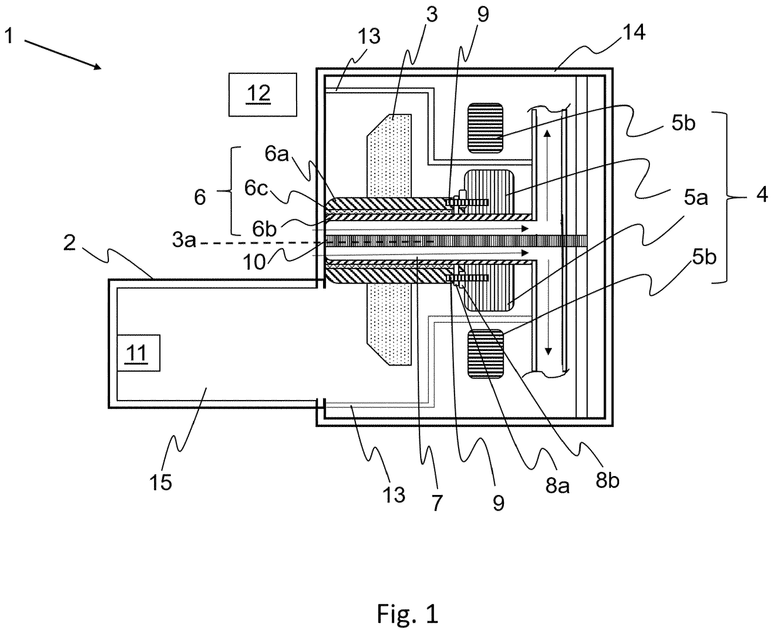

Fig. 1 shows an X-ray source 1 comprising an X-ray tube 2, a rotatable anode 3 disposed inside the X-ray tube. The rotatable anode is configured to rotate about its central axis 3a. The X-ray source shown in Fig. 1 also comprises a cathode 11.

The X-ray source also comprises an anode drive 4 comprising a rotor 5a, which is connected with the rotatable anode, and a stator 5b.

The anode drive is a flux switching machine, FSM, and the rotor is a solid rotor.

The X-ray source shown in Fig. 1 further comprises a bearing 6 to which the anode and the solid rotor are mounted. The bearing shown in Fig. 1 is, merely as an example, a spiral groove bearing.

The bearing has a rotating portion 6a and a static portion 6b arranged concentrically. A lubricating film 6c is provided between the rotating portion and the static portion. The static portion is configured as a hollow shaft through which cooling fluid 7 is transported. A possible transport direction of the cooling fluid is indicated by arrows.

The X-ray source also comprises elements 8a and 8b, e.g., a pressure plate 8a (also referred to as a thrust washer or thrust disc) and a spacer 8b. The rotor is fixed to the bearing by means of screws 9, the screws extending through the spacer into the rotating portion. However, these are merely examples and other mounting arrangements and fixing means are conceivable.

The X-ray source may comprise a bolt 10 that extends through the hollow shaft. This may support cooling.

A cooling system 12 is shown only schematically.

Furthermore, portions of an inner housing 13 and an outer housing 14 of the X-ray source are shown in Fig. 1. The inner housing separates the stator from the rotor and the rotating anode. Thus, while the anode and the rotor may be in a vacuum environment during operation, the stator need not be arranged in the vacuum environment. The portion of the X-ray source where there may be a vacuum, in operation, is indicated with reference sign 15.

The outer housing houses, for example, the inner housing and the stator of the motor. It may also house at least part of the cooling system 12.

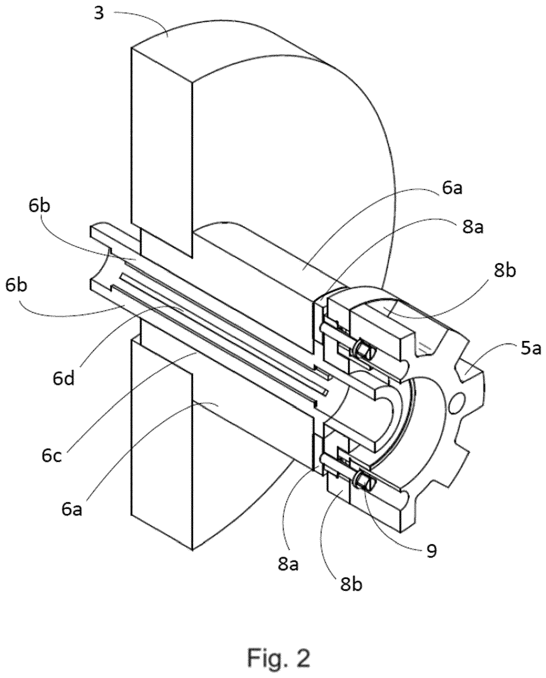

Fig. 2 shows a portion of an X-ray source, for example of the X-ray source as described in the context of Fig. 1. The same reference signs are used for same or similar elements shown in Fig. 1. In addition to elements as described in the context of Fig. 1 and shown in Fig. 1, Fig. 2 illustrates that optionally slats 6d may be provided on the inner surface of the rotating portion 6a of the bearing, formed as a hollow shaft. This improves heat transfer between the bearing and the cooling fluid. Some elements shown in Fig. 1, e.g., the bolt 10, have been omitted to allow for a better view of other elements.

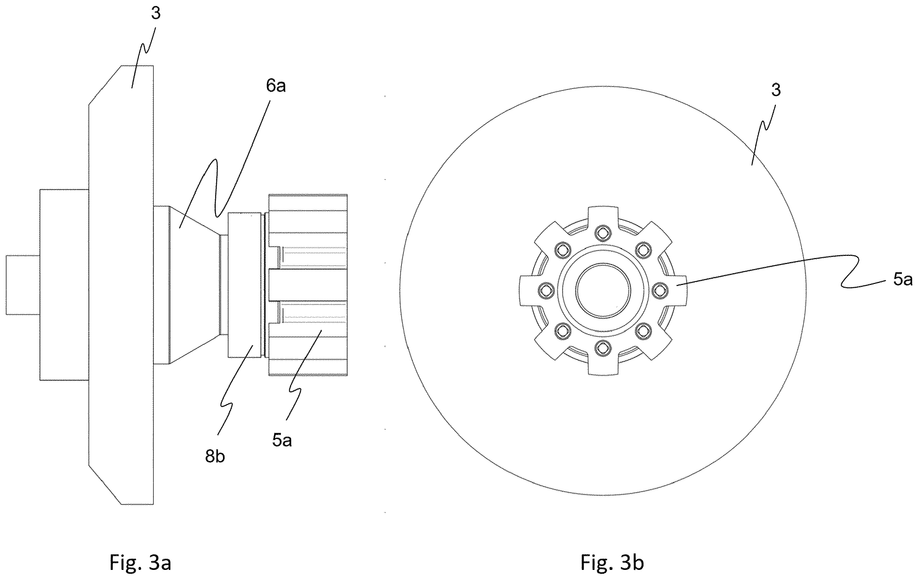

Figs. 3a and 3b show a schematic and not to scale side view and front view of a portion of an X-ray source. The "front view" is a view where the solid rotor is closest to the viewer, e.g., consistently with the oblique view of Fig. 2.

The same reference signs are used in Figs 3a and 3b for the same or similar elements shown in Figs. 1 and 2.

Methods for manufacturing an X-ray source may comprise, as an example, manufacturing an X-ray source 1 as described above. The method may comprise providing an X-ray tube 2, disposing a rotatable anode 3 inside the X-ray tube, providing an anode drive comprising the rotor 5a and connecting the rotor with the rotatable anode. The method may comprise providing the stator. The solid rotor may be provided inside inner housing 13 and the stator may be provided between the inner housing 13 and the outer housing 14. The solid rotor may, for example, be milled from a piece of material. The shape of the solid rotor may be determined, in advance, using an optimization procedure, particularly to determine the length of the solid rotor.

Methods for operating an X-ray source may comprise, as an example, operating an X-ray source as described above. It may comprise driving, by means of an anode drive 4, the rotatable anode 3 disposed inside the X-ray tube 2 about the anode's central axis 3a.

The method may further comprise cooling the solid rotor, particularly while driving the solid rotor, for example by means of a cooling system 12 that is thermally connected to the solid rotor via the mounting of the solid rotor. In particular, the cooling may include transporting a cooling fluid through the static portion 6b of the bearing 6, e.g., in the direction indicated in Fig. 1.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

### LIST OF REFERENCE SIGNS:

Rotary anode X-ray source 1;
X-ray tube 2;
Rotatable anode 3;
Central axis 3a;
Anode drive 4;
Solid rotor 5a;
Stator 5b;
Bearing 6;
Rotating portion 6a;
Static portion 6b;
Lubricating film 6c;
Slats 6d;
Cooling fluid 7;
Elements 8a and 8b;
Screws 9;
Bolt 10;
Cathode 11;
Cooling system 12;
Inner housing 13;
Outer housing 14;
Vacuum portion 15

## Claims

1. A rotary anode X-ray source (1), comprising:
an X-ray tube (2);
a rotatable anode (3) disposed inside the X-ray tube (2), wherein the rotatable anode (3) is configured to rotate about its central axis (3a); and
an anode drive (4) comprising a rotor (5a), which is connected with the rotatable anode (3),
**characterized in that**
the anode drive (4) is a flux switching machine, FSM, and
the rotor (5a) is a solid rotor (5a).

2. The X-ray source according to claim 1, wherein the solid rotor (5a) is made from a single piece of material.

3. The X-ray source according to claim 1 or 2, wherein the solid rotor dimensions, particularly the longitudinal dimension of the solid rotor (5a), are determined taking into account an optimization that minimizes eddy currents.

4. The X-ray source according to any of the preceding claims, wherein the solid rotor (5a) dimension in the longitudinal direction is equal to or less than 45 mm, in particular equal to or less than 35 mm, in particular equal to or less than 25 mm.

5. The X-ray source according to any of the preceding claims, wherein the solid rotor (5a) is mounted using a rotor mounting without a shaft.

6. The X-ray source according to any of the preceding claims, wherein the solid rotor (5a) is mounted directly to a bearing (6), in particular a bearing to which the anode (3) is mounted,
in particular, the solid rotor (5a) may be mounted directly to a spiral groove bearing.

7. The X-ray source according to claim 6, wherein the bearing is configured such that its rotating portion (6a) is arranged concentrically with its static portion (6b), the static portion (6a) being a hollow shaft, the X-ray source configured to transport cooling fluid (7) through the hollow shaft for cooling,
in particular, wherein the solid rotor (5a) is in the shape of a hollow cylinder and the hollow shaft extends through the hollow portion of the solid rotor (5a) in a longitudinal direction, the X-ray source configured such that, in operation, the solid rotor (5a) rotates around the hollow shaft.

8. The X-ray source according to claim 6 or 7, wherein the solid rotor (5a) is mounted to the bearing (6) in such a manner as to allow for thermal conduction between the solid rotor (5a) and the rotating portion (6a) of the bearing (6), in particular, such that a surface of the rotating portion (6a) of the bearing and a surface of the solid rotor (5a) are in direct contact or coupled only via one or more elements (8a, 8b) that are thermally conductive at operating temperature.

9. The X-ray source according to any of the preceding claims, the X-ray source further comprising a cooling system (12), wherein the cooling system (12) is thermally connected to the solid rotor (5a) via the mounting of the solid rotor (5a), in particular, wherein the X-ray source is configured such that, in operation, cooling of the solid rotor is effected by a heat exchange between a cooling fluid and the solid rotor, particularly directly, via a/the mounting of the solid rotor, in particular a/the bearing to which the solid rotor is mounted.

10. The X-ray source according to any of the preceding claims, wherein the solid rotor (5a) is formed in the shape of a cylinder, particularly a hollow cylinder having a gear-shape, the cylinder-axis corresponding to the longitudinal axis of the solid rotor (5a), wherein the solid rotor (5a) is mounted so as to revolve around the longitudinal axis.

11. The X-ray source according to any of the preceding claims, wherein the solid rotor (5a) is made from ferromagnetic material, in particular an iron material, in particular stainless steel or tempered steel.

12. The X-ray source according to any of the preceding claims, wherein the solid rotor (5a) is a single piece of material obtained by milling and/or molding and/or cutting and/or 3D-printing.

13. A method for manufacturing an X-ray source (1), particularly an X-ray source (1) according to any of the preceding claims, the method comprising:
providing an X-ray tube (2);
disposing a rotatable anode (3) inside the X-ray tube (2), wherein the rotatable anode (3) is configured to rotate about its central axis (3a);
providing an anode drive (4) comprising a rotor (5a); and
connecting the rotor (5a) with the rotatable anode (3),
**characterized in that**
the anode drive is a flux switching machine, FSM, and
the rotor (5a) is a solid rotor (5a).

14. The method according to claim 13,
comprising manufacturing the solid rotor (5a); and/or
comprising, prior to manufacturing the solid rotor (5a), determining the solid rotor (5a) dimensions, particularly the longitudinal dimension of the solid rotor (5a), taking into account an optimization that minimizes eddy currents; and/or
comprising manufacturing the solid rotor (5a) such that the solid rotor dimension in the longitudinal direction is equal to or less than 45 mm, in particular equal to or less than 35 mm, in particular equal to or less than 25 mm; and/or
wherein disposing the rotatable anode inside the X-ray tube comprises mounting the solid rotor (5a) using a rotor mounting without a shaft, in particular mounting the solid rotor (5a) directly to a bearing (6), in particular a bearing (6) to which the anode (3) is mounted, in particular, mounting the solid rotor (5a) to a spiral groove bearing; and/or
a/the bearing (6) is configured such that its rotating portion (6a) is arranged concentrically with its static portion (6b), the static portion (6b) being a hollow shaft, the X-ray source configured to transport cooling fluid (7) through the hollow shaft for cooling, in particular, wherein the solid rotor (5a) is in the shape of a hollow cylinder and the hollow shaft extends through the hollow portion of the solid rotor (5a) in a longitudinal direction, the X-ray source configured such that, in operation, the solid rotor (5a) rotates around the hollow shaft; and/or
comprising mounting the solid rotor (5a) to a/the bearing (6) in such a manner as to allow for thermal conduction between the solid rotor (5a) and the rotating portion (6a) of the bearing, in particular, such that a surface of the rotating portion (6a) of the bearing (6) and a surface of the solid rotor (5a) are in direct contact or coupled only via one or more elements (8a, 8b) that are thermally conductive at operating temperature;
comprising fixing the solid rotor (5a) to the bearing by means of screws (9) or rivets or by means of welding or soldering or by means of casting; and/or
comprising thermally connecting a cooling system (12) to the solid rotor (5a), wherein the cooling system (12) is thermally connected to the solid rotor (5a) via a/the mounting of the solid rotor (5a), in particular, wherein the X-ray source is configured such that, in operation, cooling of the solid rotor is effected by a heat exchange between a cooling fluid and the solid rotor, particularly directly, via a/the mounting of the solid rotor, in particular a/the bearing to which the solid rotor is mounted; and/or
wherein the solid rotor (5a) is formed in the shape of a cylinder, particularly a hollow cylinder having a gear-shape, the cylinder-axis corresponding to the longitudinal axis of the solid rotor (5a), wherein the solid rotor (5a) is mounted so as to revolve around the longitudinal axis; and/or
wherein the solid rotor (5a) is made from ferromagnetic material, in particular an iron material, in particular stainless steel or tempered steel; and/or
comprising manufacturing the solid rotor (5a), wherein the solid rotor (5a) is a single piece of material obtained by milling and/or molding and/or cutting and/or 3D-printing.

15. A method for operating an X-ray source (1), particularly an X-ray source (1) according to any of claims 1 to 12, the method comprising:
driving, by means of an anode drive (4), a rotatable anode (3) disposed inside an X-ray tube (2) about the anode's central axis, wherein the anode drive (4) is a flux switching machine, FSM, and has a solid rotor (5a) connected to the rotatable anode (3),
in particular, further comprising cooling the solid rotor (5a), particularly while driving the solid rotor (5a), wherein the cooling is performed by means of a cooling system (12) that is thermally connected to the solid rotor (5a) via the mounting of the solid rotor (5a),
in particular, wherein the X-ray source is configured such that, in operation, cooling of the solid rotor is effected by a heat exchange between a cooling fluid and a/the solid rotor, particularly directly, via a/the mounting of the solid rotor, in particular a/the bearing to which the solid rotor is mounted.
